# EUROPEAN PATENT SPECIFICATION

(11) **EP 2 823 530 B1**
(45) Date of publication and mention of the grant of the patent: **11.12.2019**
(21) Application number: 13709520.4
(22) Date of filing: 07.03.2013
(51) Int. Cl.: H01M 8/20, H01M 8/18

(54) **INDIRECT REDOX FUEL CELL COMPRISING TUNGSTEN POLYOXOMETALLATE CONTAINING CATHOLYTE**
INDIREKTE REDOX-BRENNSTOFFZELLE MIT WOLFRAM-HALTIGEM POLYOXOMETALLAT IM KATHOLYTEN
PILE À COMBUSTIBLE RÉDOX INDIRECTE COMPRENANT UN CATHOLYTE CONTENANT UN POLYOXOMÉTALLATE AU TUNGSTÈNE

(30) Priority: 07.03.2012 GB 201204028
(43) Date of publication of application: 14.01.2015
(73) Proprietor: University of Chester, Chester CH1 4BJ (GB)
(72) Inventor: DAVIES, Hywel Owen, Runcorn Cheshire WA7 4QX (GB); WILSON, Sarah Elizabeth, Runcorn Cheshire WA7 4QX (GB); HERBERT, Matthew Alexander, Runcorn Cheshire WA7 4QX (GB); KNUCKEY, Kathryn Jane, Runcorn Cheshire WA7 4QX (GB)
(74) Representative: Potter, Julian Mark
(86) International application number: PCT/GB2013/050569
(87) International publication number: WO 2013/132258

(56) References cited:
- WO-A1-2011/015875
- WO-A1-2012/085542
- WO-A2-2007/110663
- US-A- 5 298 343

## Description

The present invention relates to fuel cells, in particular to indirect or redox fuel cells which have applications in microfuel cells for electronic and portable electronic components, and also in larger fuel cells for the automotive industry. The invention also relates to certain catholyte solutions for use in such fuel cells.

Fuel cells have been known for stationary applications such as back-up power and combined heat and power (CHP), as well as portable and remote power replacing a diesel gen-set or a battery assembly, and automotive and portable electronics technology for very many years although it is only in recent years that fuel cells have become of serious practical consideration. In its simplest form, a fuel cell is an electrochemical energy conversion device that converts fuel and oxidant into reaction product(s), producing electricity and heat in the process. In one example of such a cell, hydrogen is used as fuel, air or oxygen as the oxidant and the product of the reaction is water. The gases are fed respectively into catalysing, diffusion-type electrodes separated by a solid or liquid electrolyte which carries electrically charged ions between the two electrodes. In an indirect or redox fuel cell, the oxidant (and/or fuel in some cases) is not reacted directly at the electrode but instead reacts with the reduced form (oxidized form for fuel) of a redox couple to oxidise it. It is this oxidised species that is fed to the cathode.

There are several types of fuel cell characterised by their different electrolytes. The liquid electrolyte alkali electrolyte fuel cells have inherent disadvantages in that the electrolyte dissolves CO₂ and needs to be replaced periodically. Polymer electrolyte or PEM-type cells with proton-conducting solid cell membranes are acidic and avoid this problem. However, it has proved difficult in practice to attain power outputs from such systems approaching the theoretical maximum level, due to the relatively poor electrocatalysis of the oxygen reduction reaction. In addition, expensive noble metal electrocatalysts are often used, and it has proved difficult provide durability to meet market demands, in addition especially with a sufficient reduction in the levels of such metals to be commercially viable.

US-A-3152013 discloses a gaseous fuel cell comprising a cation-selective permeable membrane, a gas permeable catalytic electrode and a second electrode, with the membrane being positioned between the electrodes and in electrical contact only with the gas permeable electrode. An aqueous catholyte is provided in contact with the second electrode and the membrane, the catholyte including an oxidant couple therein. Means are provided for supplying a fuel gas to the permeable electrode and for supplying a gaseous oxidant to the catholyte for oxidising reduced oxidant material. The preferred catholyte and redox couple is HBr/KBr/Br₂. Nitrogen oxide is disclosed as a preferred catalyst for oxygen reduction, but with the consequence that pure oxygen is required as the oxidant, the use of air as the oxidant requiring the venting of noxious nitrogen oxide species.

An acknowledged problem concerning electrochemical fuel cells is that the theoretical potential of a given electrode reaction under defined conditions can be calculated but never completely attained. Imperfections in the system inevitably result in a loss of potential to some level below the theoretical potential attainable from any given reaction. Previous attempts to reduce such imperfections include the selection of catholyte additives which undergo oxidation-reduction reactions in the catholyte solution. For example, US-A-3294588 discloses the use of quinones and dyes in this capacity. Another redox couple which has been tried is the vanadate/vanadyl couple, as disclosed in US-A-3279949.

According to US-A-3540933, certain advantages could be realised in electrochemical fuel cells by using the same electrolyte solution as both catholyte and anolyte. This document discloses the use of a liquid electrolyte containing more than two redox couples therein, with equilibrium potentials not more than 0.8V apart from any other redox couple in the electrolyte.

The matching of the redox potentials of different redox couples in the electrolyte solution is also considered in US-A-3360401, which concerns the use of an intermediate electron transfer species to increase the rate of flow of electrical energy from a fuel cell.

Several types of proton exchange membrane fuel cells exist. For example, in US4396687 a fuel cell is disclosed which comprises regenerable anolyte and catholyte solutions. The anolyte solution is one which is reduced from an oxidised state to a reduced state by exposure of the anolyte solution to hydrogen. According to US4396687, preferred anolyte solutions are tungstosilicic acid (H₄SiW₁₂O₄₀) or tungstophosphoric acid (H₃PW₁₂O₄₀) in the presence of a catalyst.

The preferred catholyte solution of US4396687 is one which is re-oxidised from a reduced state to an oxidized state by direct exposure of the catholyte solution to oxygen. The catholyte of US4396687 includes a mediator component comprising a solution of VOSO₄. The mediator functions as an electron sink which is reduced from an oxidation state of V^{(v)} to V^{(IV)}. The catholyte also includes a catalyst for regenerating the mediator to its oxidised state, (VO₂)₂SO₄. The catalyst present in the catholyte of US4396687 is a polyoxometallate (POM) solution, namely H₅PMo₁₂V₂O₄₀. This disclosure, as well as that of US4407902 from the same company, specifically mentions the addition of VOSO₄ to a catholyte containing H₅PMo₁₀V₂O₂₄ with concentrations of 0.8M VOSO₄ and 0.059M H₅PMo₁₀V₂O₄₀.

Besides US4396687, a number of other attempts to use oxometallate catalysts have been made. For example, in US5298343, cathode systems comprising solid metal catalysts, oxometallates and metallic acids, such as molybdic acid are disclosed.

In addition, WO96/31912 describes the use of embedded polyoxometallates in an electrical storage device. The redox nature of the polyoxometallate is employed in conjunction with carbon electrode material to temporarily store electrons.

US2005/0112055 discloses the use of polyoxometallates for catalysing the electrochemical generation of oxygen from water. GB1176633 discloses a solid molybdenum oxide anode catalyst.

US2006/0024539 discloses a reactor and a corresponding method for producing electrical energy using a fuel cell by selectively oxidising CO at room temperature using polyoxometallate compounds and transition metal compounds over metal-containing catalysts.

EP-A-0228168 discloses activated carbon electrodes which are said to have improved charge storage capacity due to the adsorption of polyoxometallate compounds onto the activated carbon.

PCT/GB2007/050151 discloses a fuel cell that includes a polyoxometallate redox couple represented by the formula Xₐ[Z_{b}M_{c}O_{d}], wherein X is selected from hydrogen, alkali metals, alkaline earth metals, ammonium and combinations of two or more thereof, Z is selected from B, P, S, As, Si, Ge, Ni, Rh, Sn, Al, Cu, I, Br, F, Fe, Co, Cr, Zn, H₂, Te, Mn and Se and combinations of two or more thereof, M is a metal selected from Mo, V, Nb, Ta, Mn, Fe, Co, Cr, Ni, Zn Rh, Ru, Tl, Al, Ga, In and other metals selected from the 1^{st}, 2^{nd} and 3^{rd} transition metal series and the lanthanide series and combinations of two or more thereof, a is a number of X necessary to charge balance the [M_{c}O_{d}] anion, b is from 0 to 20, c is from 1 to 40, and d is from 1 to 180. The particularly preferred embodiments involve a molybdenum-vanadium polyoxometallate.

Prior art fuel cells all suffer from one or more of the following disadvantages:
They are inefficient; they are expensive and/or expensive to assemble; they use expensive and/or environmentally unfriendly materials; they yield inadequate and/or insufficiently maintainable or durable current densities and/or cell potentials; they are too large in their construction; they operate at too high a temperature; they produce unwanted by-products and/or pollutants and/or noxious materials; and they have not found practical, commercial utility in portable applications such as automotive and portable electronics. Those that use polyoxometallate compounds also have the problem that only a limited range of structures are available and some compositions of polyoxometallate can lead to lower solubility than is desired to maximise fuel cell performance.

It is an object of the present invention to overcome or ameliorate one or more of the aforesaid disadvantages. It is a further object of the present invention to provide an improved catholyte solution for use in redox fuel cells.

Accordingly, the present invention provides a redox fuel cell comprising an anode and a cathode separated by an ion selective polymer electrolyte membrane; means for supplying a fuel to the anode region of the cell; means for supplying an oxidant to the cathode region of the cell; means for providing an electrical circuit between the anode and the cathode; and a non-volatile catholyte solution flowing fluid communication with the cathode, the catholyte solution comprising a polyoxometallate redox couple being at least partially reduced at the cathode in operation of the cell, and at least partially re-generated by reaction with the oxidant after such reduction at the cathode. The polyoxometallate of the present invention is represented by the formula:

Xₐ[Z_{b}M_{c}O_{d}]

wherein:
X is selected from hydrogen, alkali metals, alkaline earth metals, ammonium and combinations of two or more thereof;
Z is Al and optionally includes one or more of B, P, S, As, Si, Ge, Ni, Rh, Sn, Cu, I, Br, F, Fe, Co, Cr, Zn, H₂, Te, Mn and Se ; or
Z is Si and optionally includes one or more of B, P, S, As, Ge, Ni, Rh, Sn, Al, Cu, I, Br, F, Fe, Co, Cr, Zn, H2, Te, Mn and Se;
M comprises W and optionally one or more of Mo, V, Nb, Ta, Mn, Fe, Co, Cr, Ni, Zn Rh, Ru, Tl, Al, Ga, In and other metals selected from the 1^{st}, 2^{nd} and 3^{rd} transition metal series and the lanthanide series;
a is a number of X necessary to charge balance the [Z_{b}M_{c}O_{d}]^{a-} anion;
b is in the range 0 < b ≤ 5;
c is from 5 to 30; and
d is from 1 to 180.
It is to be understood that such formulae used herein are generic formulae and that a distribution of related species may exist in solution.

The use of tungsten in the polyoxometallate compound compared to the use of the other compounds disclosed in the prior art has numerous benefits. It has been found that the tungsten polyoxometallates of the present invention are more stable at low pH and can be synthetically manipulated to a greater extent than molybdenum analogues. It is therefore possible to create a variety of different structures that are not available when using other polyoxometallate compounds, such as those containing molybdenum, and to use a wider range of materials.
Further, some compositions of polyoxometallates known in the prior art can have a lower solubility than is desired for maximum fuel cell performance. It has surprisingly been found that solubility can be improved by using tungsten polyoxometallate catalysts of the present invention. The tungsten polyoxometallates of the present invention also provide an increased electrochemical performance when compared to the polyoxometallates of the prior art.

The range of b according to the invention is 0 < b ≤ 5, preferably being 0 < b ≤ 2. Preferred ranges for c are from 5 to 30, preferably from 10 to 18 and most preferably 12.
Preferred ranges for d are from 1 to 180, preferably from 30 to 70, more preferably 34 to 62 and most preferably 34 to 40.

The polyoxometallate of the present invention preferably contains from 1 to 6 vanadium centres. Example formulae therefore include Xₐ[Z₁W₁₂₋ₓVₓO₄₀] where x = 1 to 6. In one embodiment of the present invention, the polyoxometallate has the formula Xₐ[Z₁W₉V₃O₄₀]. In another embodiment, the polyoxometallate has the formula Xₐ[Z₁W₁₁V₁O₄₀].

Other preferred polyoxometallate variants include:

Xₐ[Z_{b}WᵥM¹_{w}M²ₓM³_{y}M⁴_{z}O_{d}]

Wherein X, Z, a, b and d have the meanings and values ascribed herein and wherein M¹, M², M³, and M⁴ are independently selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w+x+y+z = c, the value of which is as previously ascribed; and wherein v is at least 1.

Other preferred polyoxometallate variants include:

Xₐ[Z_{b}WᵥM¹_{w}M²ₓM³yO_{d}]

Wherein X, Z, a, b and d have the meanings and values ascribed herein and wherein M¹, M² and M³, and are independently selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w+x+y = c, the value of which is as previously ascribed; and wherein v is at least 1.

Other preferred polyoxometallate variants include:

Xₐ[Z_{b}WᵥM¹_{w}M²ₓO_{d}]

Wherein X, Z, a, b and d have the meanings and values ascribed herein and wherein M¹ and M² are independently selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w+x = c, the value of which is as previously ascribed; and wherein v is at least 1.

Specifically preferred examples of these types of polyoxometallate variants include those in which M¹ is vanadium and M² is molybdenum.

In a particularly preferred variant v=w=x and, in the case where c is 12, v=w=x=4 - as in W₄Mo₄V₄.

Other preferred polyoxometallate variants include:

Xₐ[Z_{b}WᵥM¹_{w}O_{d}]

Wherein X, Z, a, b and d have the meanings and values ascribed herein and wherein is selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w = c, the value of which is as previously ascribed; and wherein v is at least 1.

Z is AL and/or Si, and optionally includes one or more of B, P, S, As, Ge, Co, Mn or Se. Of these, P, S, or Co are most preferred. The successful use of such a range of atoms would not be possible with a polyoxometallate that contains, for example, molybdenum, as outlined in the prior art. In particular, the use of silicon and aluminium in combination with tungsten in the polyoxometallates of the present invention has surprisingly been shown to significantly improve the performance of the fuel cells. For example, tungsten polyoxometallates with aluminium or silicon demonstrate more reversible electrochemical properties at a higher potential compared to the polyoxometallates commonly found in the prior art.

M preferably consists of 1 to 3 different elements. In one embodiment, M is a combination of tungsten, vanadium and/or molybdenum. The polyoxometallate may be absent of molybdenum, and further may be absent of any metals other than tungsten or vanadium. The polyoxometallate may alternatively consist of tungsten. M preferably includes more than two, more than four or more than six tungsten atoms.

Hydrogen, or a combination of hydrogen and an alkali metal and/or alkaline earth metal are particularly preferred examples for X. X preferably comprises a hydrogen ion or a combination of a hydrogen ion and an alkali metal ion, and more preferably comprises one or more of H⁺, Na⁺, K⁺ or Li⁺. Preferred combinations include hydrogen, hydrogen with sodium and hydrogen with potassium.

In a preferred embodiment, the polyoxometallate may be H₆[AlW₁₁V₁O₄₀]. Alternatively the polyoxometallate may be X₇[SiW₉V₃O₄₀] where, as an example, X can give rise to the general formula K₂H₅[SiW₉V₃O₄₀]. Further, a mixture of these or other polyoxometallate catalysts is also envisaged.

The concentration of the polyoxometallate in the catholyte solution is between 0.01M and 0.6M. If the polyoxometallate of the present invention is the major constituent of the catholyte solution, a concentration range of 0.1M - 0.6M is preferred, whilst 0.15M - 0.4M is most preferred.

In one preferred embodiment of the invention, the ion selective PEM is a cation selective membrane which is selective in favour of protons versus other cations.

The cation selective polymer electrolyte membrane may be formed from any suitable material, but preferably comprises a polymeric substrate having cation exchange capability. Suitable examples include fluororesin-type ion exchange resins and non-fluororesin-type ion exchange resins. Fluororesin-type ion exchange resins include perfluorocarboxylic acid resins, perfluorosulfonic acid resins, and the like. Perfluorosulfonic acid resins are preferred, for example "Nafion" (Du Pont Inc.), "Flemion" (Asahi Gas Ltd), "Aciplex" (Asahi Kasei Inc) and the like. Non-fluororesin-type ion exchange resins include polyvinylalcohols, polyalkylene oxides, styrene-divinylbenzene ion exchange resins and the like, and metal salts thereof. Preferred non-fluororesin-type ion exchange resins include polyalkylene oxide-alkali metal salt complexes. These are obtainable by polymerizing an ethylene oxide oligomer in the presence of lithium chlorate or another alkali metal salt, for example. Other examples include phenolsulphonic acid, polystyrene sulphonic, polytriflurostyrene sulphonic, sulphonated trifluorostyrene, sulphonated copolymers based on α,β,β triflurostyrene monomer, radiation-grafted membranes. Non-fluorinated membranes include sulphonated poly(phenylquinoxalines), poly (2,6 diphenyl-4-phenylene oxide), poly(arylether sulphone), poly(2,6-diphenylenol), acid-doped polybenzimidazole, sulphonated polyimides, styrene/ethylene-butadiene/styrene triblock copolymers, partially sulphonated polyarylene ether sulphone, partially sulphonated polyether ether ketone (PEEK), and polybenzyl suphonic acid siloxane (PBSS).

In some cases, it may be desirable for the ion selective polymer electrolyte membrane to comprise a bimembrane. The bimembrane, if present, will generally comprise a first cation selective membrane and a second anion selective membrane. In this case, the bimembrane may comprise an adjacent pairing of oppositely charge selective membranes. For example, the bimembrane may comprise at least two discreet membranes which may be placed side-by-side with an optional gap therebetween. Preferably, the size of the gap, if any, is kept to a minimum in the redox cell of the invention. The use of a bimembrane may be used in the redox fuel cell of the invention to maximise the potential of the cell, by maintaining the potential due to a pH drop between the anode and catholyte solution. Without being limited by theory, in order for this potential to be maintained in the membrane system, at some point in the system, protons must be the dominant charge transfer vehicle. A single cation-selective membrane may not achieve this to the same extent due to the free movement of other cations from the catholyte solution in the membrane.

In this case, the cation selective membrane may be positioned on the cathode side of the bimembrane and the anion selective membrane may be positioned on the anode side of the bimembrane. In this case, the cation selective membrane is adapted to allow protons to pass through the membrane from the anode side to the cathode side thereof in operation of the cell. The anion selective membrane is adapted substantially to prevent cationic materials from passing therethrough from the cathode side to the anode side thereof, although in this case anionic materials may pass from the cathode side of the anionic-selective membrane to the anode side thereof, whereupon they may combine with protons passing through the membrane in the opposite direction. Preferably, the anion selective membrane is selective for hydroxyl ions and combination with protons therefore yields water as a product.

In a second embodiment of the invention the cation selective membrane is positioned on the anode side of the bimembrane and the anion selective membrane is positioned on the cathode side of the bimembrane. In this case, the cation selective membrane is adapted to allow protons to pass through the membrane from the anode side to the cathode side thereof in operation of the cell. In this case, anions can pass from the cathode side into the interstitial space of the bimembrane, and protons will pass from the anode side. It may be desirable in this case to provide means for flushing such protons and anionic materials from the interstitial space of the bimembrane. Such means may comprise one or more perforations in the cation selective membrane, allowing such flushing directly through the membrane. Alternatively, means may be provided for channelling flushed materials around the cation selective membrane from the interstitial space to the cathode side of the said membrane.

According to another aspect of the present invention, there is provided a method of operating a proton exchange membrane fuel cell comprising the steps of:
a) forming H⁺ ions at an anode situated adjacent to an ion selective polymer electrolyte membrane;
b) supplying the catholyte of the invention with its redox couple in an oxidised state to a cathode situated oppositely adjacent to the ion selective polymer electrolyte membrane; and
c) allowing the catalyst to become reduced upon contact with the cathode concomitantly with H⁺ ions passing through the membrane to balance charge.

In a preferred embodiment, the catholyte is supplied from a catholyte reservoir. In other preferred embodiments, the ion selective polymer electrolyte membrane is a proton exchange membrane.

The method of the above aspect may additionally comprise the step of:
d) passing the catholyte from the cathode to a reoxidation zone wherein the catalyst is reoxidised.

In an especially preferred embodiment, the method of the above aspect comprises the step of:
e) passing the catholyte from the reoxidation zone to the catholyte reservoir.

In a further embodiment, the cell is cyclic and the catalyst in the cathode can be repeatedly oxidised and reduced without having to be replaced.

The fuel cell of the invention may comprise a reformer configured to convert available fuel precursors such as natural gas, LPG, LNG, gasoline or low molecular weight alcohols into a fuel gas (eg hydrogen) through a steam reforming reaction. The cell may then comprise a fuel gas supply device configured to supply the reformed fuel gas to the anode chamber.

It may be desirable in certain applications of the cell to provide a fuel humidifier configured to humidify the fuel, eg hydrogen. The cell may then comprise a fuel supply device configured to supply the humidified fuel to the anode chamber.

An electricity loading device configured to load an electric power may also be provided in association with the fuel cell of the invention.

Preferred fuels include hydrogen, low molecular weight alcohols, aldehydes and carboxylic acids, sugars and biofuels as well as LPG, LNG or gasoline.

Preferred oxidants include air, oxygen and peroxides.

The anode in the redox fuel cell of the invention may for example react with hydrogen gas or methanol; other low molecular weight alcohols such as ethanol or propanol; dipropylene glycol; ethylene glycol; aldehydes formed from these; and acid species such as formic acid, ethanoic acid etc. In addition, the anode may be formed from a bio-fuel cell type system where a bacterial species consumes a fuel and either produces a mediator which is oxidized at the electrode, or the bacteria themselves are adsorbed at the electrode and directly donate electrons to the anode.

The cathode in the redox fuel cell of the invention may comprise a cathodic material such as carbon, gold, platinum, nickel or metal oxide species. However, it is preferable that expensive cathodic materials are avoided and therefore preferred cathodic materials include carbon, nickel and metal oxide. One preferable material for the cathodes is reticulated vitreous carbon or carbon fibre based electrodes such as carbon felt. Another is nickel foam. The cathodic material may be constructed from a fine dispersion of particulate cathodic material, the particulate dispersion being held together by a suitable adhesive, or by a proton conducting polymeric material. The cathode is designed to create maximum flow of catholyte solution to the cathode surface. Thus it may consist of shaped flow regulators or a three dimensional electrode; the liquid flow may be managed in a flow-by arrangement where there is a liquid channel adjacent to the electrode, or in the case of the three dimensional electrode, where the liquid is forced to flow through the electrode. It is intended that the surface of the electrode is also the electrocatalyst, but it may be beneficial to adhere the electrocatalyst in the form of deposited particles on the surface of the electrode.

The redox couple flowing in solution in the cathode chamber in operation of the cell is used in the invention as a catalyst for the reduction of oxygen in the cathode chamber, in accordance with the following (wherein Sp is the redox couple species):

O₂⁺4Sp_{red} + 4H⁺ → 2H₂O + 4Spₒₓ

The polyoxometallate redox couple, and any other ancillary redox couple, utilised in the fuel cell of the invention should be non-volatile and is preferably soluble in aqueous solvent. Preferred redox couples should react with the oxidant at a rate effective to generate a useful current in the electrical circuit of the fuel cell, and react with the oxidant such that water is the ultimate end product of the reaction.

The fuel cell of the present invention requires the presence of between 0.01M and 0.6M of a polyoxometallate species in the catholyte solution. The polyoxometallates as outlined above can comprise 1% to 100% of the total amount of redox species in the cell. The fuel cell works when the tungsten polyoxometallates as outlined above are the major constituents of the catholyte. In this case, the concentration of the polyoxometallate is preferably between 0.1M and 0.6M, more preferably between 0.15M and 0.4M.

However, in some circumstances it may also be advantageous to include other redox couples in the catholyte solution in addition to the polyoxometallate species of the present invention. The polyoxometallates of the present invention may therefore be minor constituents of the catholyte solution and so smaller concentrations than above may be used.

There are many suitable examples of such ancillary redox couples, including ligated transition metal complexes, triphenylamine type materials as described in patent WO2011015875, other polyoxometallate species and combinations thereof. Specific examples of suitable transition metal ions which can form such complexes include manganese in oxidation states II - V, iron I-IV, copper I-III, cobalt I-III, nickel I-III, chromium (II-VII), titanium II-IV, tungsten IV-VI, vanadium II - V and molybdenum II-VI. Ligands can contain carbon, hydrogen, oxygen, nitrogen, sulphur, halides or phosphorus. Ligands may be chelating complexes such as Fe/EDTA and Mn/EDTA, NTA, 2-hydroxyethylenediaminetriacetic acid, or non-chelating ligands such as cyanide.

A preferred additional polyoxometallate compound for use in the fuel cell of the present invention in combination with the polyoxometallates of the present invention is represented by the formula:

Xₐ[Z_{b}M_{c}O_{d}]

wherein:
X is selected from hydrogen, alkali metals, alkaline earth metals, ammonium and combinations of two or more thereof;
Z is selected from B, P, S, As, Si, Ge, Ni, Rh, Sn, Al, Cu, I, Br, F, Fe, Co, Cr, Zn, H₂, Te, Mn and Se and combinations of two or more thereof;
M is a metal selected from Mo, W, V, Nb, Ta, Mn, Fe, Co, Cr, Ni, Zn Rh, Ru, Tl, Al, Ga, In and other metals selected from the 1^{st}, 2^{nd} and 3^{rd} transition metal series and the lanthanide series and combinations of two or more thereof;
a is a number of X necessary to charge balance the [Z_{b}M_{c}O_{d}]^{a-} anion;
b is from 0 to 20;
c is from 1 to 40; and
d is from 1 to 180.

In some embodiments, the additional polyoxometallate comprises H₆₋ₓNaₓPMo₉V₃O₄₀ where x = 0 - 3. In still further embodiments, the additional polyoxometallate comprises H₆₋ₓNaₓPMo₈V₄O₄₀ where x = 0 - 4.

In some embodiments, the polyoxometallate of the present invention is present at a concentration of between 5% and 15% the total amount of polyoxometallate in a fuel cell. It has surprisingly been found that the addition of this amount of the polyoxometallate of the present invention improves the performance of the fuel cells of the prior art.

The triphenylamine type materials for use in combination with the polyoxometallates of the present invention comprise formula (I): 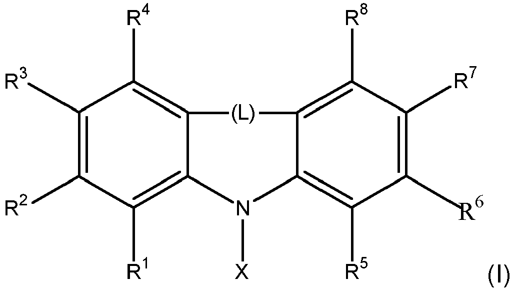 wherein:
X is selected from hydrogen and from functional groups comprising halogen, hydroxyl, amino, protonated amino, imino, nitro, cyano, acyl, acyloxy, sulphate, sulfonyl, sulfinyl, alkyamino, protonated alkylamino, quaternary alkylammonium, carboxy, carboxylic acid, ester, ether, amido, sulfonate, sulfonic acid, sulphonamide, phosphonic acid, phosphonate, phosphate, alkylsulfonyl, arylsulfonyl, alkoxycarbonyl, alkylsulfinyl, arylsulfinyl, alkylthio, arylthio, alkyl, alkoxy, oxyester, oxyamido, aryl, fused-aryl, arylamino, aryloxy, heterocycloalkyl, heteroaryl, fused-heteroaryl, (C₂-C₅)alkenyl, (C₂-C₅)alkynyl, azido, phenylsulfonyloxy, amino acid or a combination thereof;
R¹⁻⁸ are independently selected from hydrogen, halogen, hydroxyl, amino, protonated amino, imino, nitro, cyano, acyl, acyloxy, sulphate, sulfonyl, sulfinyl, alkyamino, protonated alkylamino, quaternary alkylammonium, carboxy, carboxylic acid, ester, ether, amido, sulfonate, sulfonic acid, sulphonamide, phosphonic acid, phosphonate, phosphate, alkylsulfonyl, arylsulfonyl, alkoxycarbonyl, alkylsulfinyl, arylsulfinyl, alkylthio, arylthio, alkyl, alkoxy, oxyester, oxyamido, aryl, fused-aryl, arylamino, aryloxy, heterocycloalkyl, heteroaryl, fused-heteroaryl, (C₂-C₅)alkenyl, (C₂-0C₅)alkynyl, azido, phenylsulfonyloxy, amino acid or a combination thereof;
R¹ and X and/or R⁵ and X may together form an optionally substituted ring structure;
R¹ and R² and/or R² and R³ and/or R³ and R⁴ and/or R⁴ and R⁸ and/or R⁸ and R⁷ and/or R⁷ and R⁶ and/or R⁶ and R⁵ may together form an optionally substituted ring structure; wherein
(L) indicates the optional presence of a linking bond or group between the two neighbouring aromatic rings of the structure, and when present may form an optionally substituted ring structure with one or both of R⁴ and R⁸; and wherein at least one substituent group of the structure is a charge-modifying substituent.

The fuel cell of the invention may operate straightforwardly with a redox couple catalysing in operation of the fuel cell the reduction of oxidant in the cathode chamber. However, in some cases, and with some redox couples, it may be necessary and/or desirable to incorporate a catalytic mediator in the cathode chamber.

Also provided is a catholyte solution for use in a redox fuel cell according to any preceding claim, the solution comprising between 0.01M and 0.6M of a polyoxometallate, as well as the use of a fuel cell as described herein to produce electricity.

Various aspects of the present invention will now be more particularly described with reference to the following figures which illustrate embodiments of the present invention:
Figure 1 illustrates a schematic view of the cathode compartment of a fuel cell in accordance with the present invention;
Figures 2a and b are graphs showing comparative data demonstrating the difference in performance between a fuel cell using a prior art polyoxometallate (Na₄H₃PMo₈V₄O₄₀, "V4-POM") and one using a tungsten containing polyoxometallate with the formula K₂H₅SiW₉V₃O₄₀, "Si-POM";
Figures 3a and b are graphs showing further comparative data demonstrating the difference in performance between a fuel cell using a prior art (Na₄H₃PMo₈V₄O₄₀, "V4-POM") and one using a tungsten polyoxometallate with the formula H₆AlW₁₁V₁O₄₀, "Al-POM";
Figures 4a and b are graphs showing further comparative data demonstrating the difference in performance between a fuel cell using only a prior art polyoxometallate (Na₄H₃PMo₈V₄O₄₀, "V4-POM") and one using the same polyoxometallate with additionally either 5%, 10% or 15% of a tungsten polyoxometallate with the formula H₆AlW₁₁V₁O₄₀, "Al-POM".

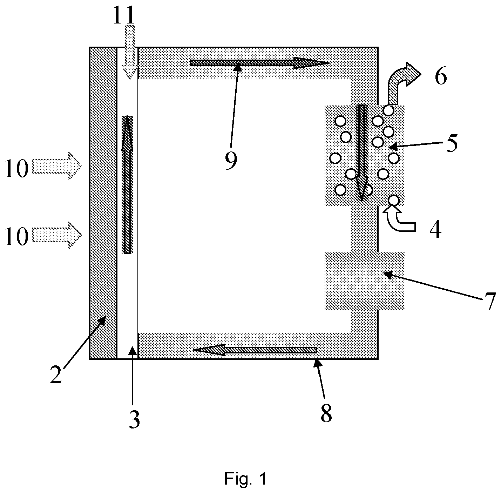

Referring to Fig. 1, there is shown the cathode side of fuel cell 1 in accordance with the invention comprising a polymer electrolyte membrane 2 separating an anode (not shown) from cathode 3. Cathode 3 comprises in this diagram reticulated carbon and is therefore porous. However, other cathodic materials such as platinum may be used. Polymer electrolyte membrane 2 comprises cation selective Nafion 112 membrane through which protons generated by the (optionally catalytic) oxidation of fuel gas (in this case hydrogen) in the anode chamber pass in operation of the cell. Electrons generated at the anode by the oxidation of fuel gas flow in an electrical circuit (not shown) and are returned to cathode 3. Fuel gas (in this case hydrogen) is supplied to the fuel gas passage of the anode chamber (not shown), while the oxidant (in this case air) is supplied to oxidant inlet 4 of cathode gas reaction chamber 5. Cathode gas reaction chamber 5 (the catalyst reoxidation zone) is provided with exhaust 6, through which the by-products of the fuel cell reaction (eg water and heat) can be discharged.

A catholyte solution comprising the oxidised form of the polyoxometallate redox catalyst is supplied in operation of the cell from catholyte reservoir 7 into the cathode inlet channel 8. The catholyte passes into reticulated carbon cathode 3, which is situated adjacent membrane 2. As the catholyte passes through cathode 3, the polyoxometallate catalyst is reduced and is then returned to cathode gas reaction chamber 5 via cathode outlet channel 9.

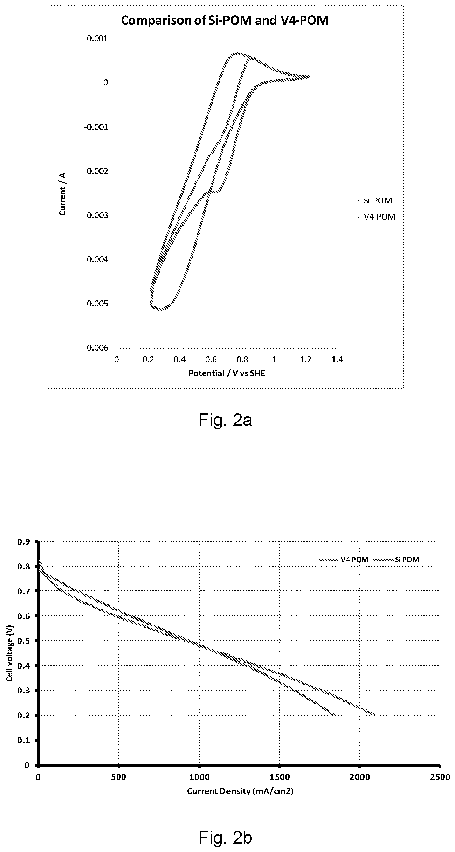

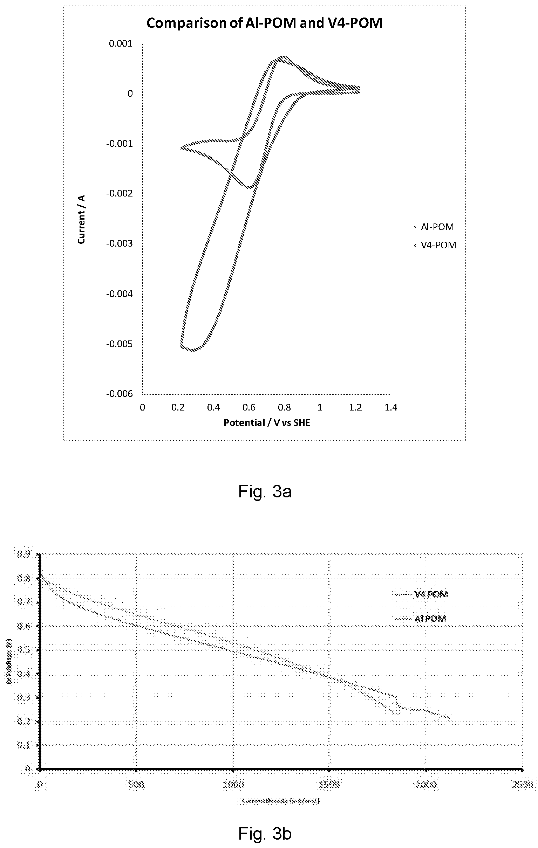

For the electrochemical comparisons of cyclic voltammograms shown in the Figures 2a and 3a, measurements have been made at 65°C using a three electrode system including a polished glassy carbon working electrode, platinum counter electrode and saturated calomel reference electrode. All potentials have been converted and are given with respect to a standard hydrogen electrode (SHE). Approximately 0.3M concentrations of POM catholytes have been used with no additional supporting electrolyte.

Figures 2a and 3a respectively show that the Si and Al tungsten polyoxometallate materials of the present invention demonstrate more reversible electrochemical properties at a higher potential compared to the V4 polyoxometallates that are commonly found in the prior art.

Fuel cell data presented in Figure 2b was collected using a 25cm² single cell with a felt (GFD 2.5mm) graphitic carbon cathode and an Ion Power NRE212 membrane. H₂ was run dead ended with pressure set to 0.7 bar. The cell temperature was monitored and maintained at 80°C. The data shown in the polarisation curve shows that the initial slope for the Si tungsten polyoxometallate material (Si-POM) is less steep than for the V4-POM, meaning that a higher potential is recorded at a set point of 400 mA/cm² for the Si tungsten polyoxometallate system (Si-POM). The shallower slope illustrates the more rapid electrode kinetics seen in Figure 2a.

Fuel cell data presented in Figure 3b was collected using a 25cm² single cell with a felt (GFD 2.5EA, SGL) graphitic carbon cathode and an Ion Power NRE212 membrane. H₂ was run dead ended with pressure set to 0.8 bar and a catholyte flow rate of 200ml/min was used. The cell temperature was monitored and maintained at 80°C. The data in the polarisation curve shows that when the open circuit potentials of the two materials are adjusted to approximately the same level, there is no initial drop for the Al tungsten polyoxometallate material (Al-POM) as is seen for the V4-POM. A higher potential is recorded at a set point of 400 mA/cm² for the Al tungsten polyoxometallate system (Al-POM).

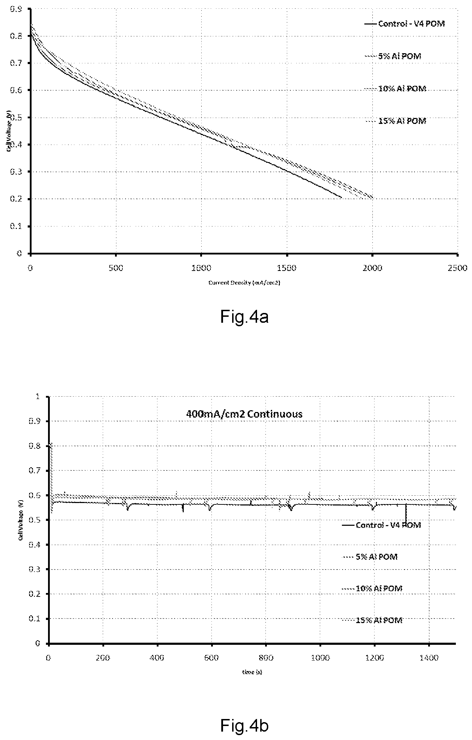

For Figures 4a and b, a 25cm² single cell was built utilising a felt electrode (Sigracell GFD 2.5 EA) and an Ion Power NRE212 MEA. H₂ was run dead ended with pressure set to 0.8 bar and a catholyte flow rate of 200ml/min was used. The cell temperature was monitored and maintained at 80°C. After running a standard V4-POM experiment, Al tungsten polyoxometallate (Al-POM) was added in 5, 10 and 15% quantities with a polarisation curve and steady state measurement at 400 mA/cm² being recorded for each. The fuel cell data presented shows that both the polarisation curve and the steady state measurement are improved upon the addition of Al-POM to the V4-POM. It appears that the initial 5% addition is sufficient to induce a significant performance enhancement with subsequent additions having a lesser effect.

## Claims

1. A redox fuel cell comprising an anode and a cathode separated by an ion selective polymer electrolyte membrane; means for supplying a fuel to the anode region of the cell; means for supplying an oxidant to the cathode region of the cell; means for providing an electrical circuit between the anode and the cathode; a non-volatile catholyte solution flowing fluid communication with the cathode, the catholyte solution comprising a polyoxometallate redox couple being at least partially reduced at the cathode in operation of the cell, and at least partially re-generated by reaction with the oxidant after such reduction at the cathode,
wherein the polyoxometallate is represented by the formula:
Xₐ[Z_{b}M_{c}O_{d}]
wherein:
X is selected from hydrogen, alkali metals, alkaline earth metals, ammonium and combinations of two or more thereof;
Z is Al and optionally includes one or more of B, P, S, As, Si, Ge, Ni, Rh, Sn, Cu, I, Br, F, Fe, Co, Cr, Zn, H₂, Te, Mn and Se; or
Z is Si and optionally includes one or more of B, P, S, As, Ge, Ni, Rh, Sn, Al, Cu, I, Br, F, Fe, Co, Cr, Zn, H2, Te, Mn and Se;
M comprises W and one or more of Mo, V, Nb, Ta, Mn, Fe, Co, Cr, Ni, Zn Rh, Ru, Tl, Al, Ga, In and other metals selected from the 1^{st}, 2^{nd} and 3^{rd} transition metal series and the lanthanide series;
a is a number of X necessary to charge balance the [Z_{b}M_{c}O_{d}]^{a-} anion;
b is in the range 0 < b ≤ 5 ;
c is from 5 to 30; and
d is from 1 to 180.

2. A redox fuel cell according to claim 1 wherein:
a. b in the range 0 < b ≤ 2;
b. c is from 10 to 18 and optionally c is 12; and/or
c. d is from 30 to 70, optionally d is from 34 to 62 and further optionally, d is from 34 to 40.

3. A redox fuel cell according to any one of claims 1 or 2 wherein:
the polyoxometallate is represented by the formula:
Xₐ[Z_{b}WᵥM¹_{w}M²ₓM³_{y}M⁴_{z}O_{d}]
wherein X, Z, a, b and d have the meanings and values ascribed in any one of claims 1 or 2 and wherein M¹, M², M³, and M⁴ are independently selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w+x+y+z = c, the value of which is as ascribed in any one of claims 1 or 2; and wherein v is at least 1; or
the polyoxometallate is represented by the formula:
Xₐ[Z_{b}WᵥM¹_{w}M²ₓM³_{y}O_{d}]
wherein X, Z, a, b and d have the meanings and values as ascribed in any one of claims 1 or 2 and wherein M¹, M² and M³ are independently selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w+x+y = c, the value of which is as ascribed in any one of claims 1 or 2; and wherein v is at least 1; or
the polyoxometallate is represented by the formula:
Xₐ[Z_{b}WᵥM¹_{w}M²ₓO_{d}]
wherein X, Z, a, b and d have the meanings and values as ascribed in any one of claims 1 or 2 and wherein and M² are independently selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w+x = c, the value of which is as ascribed in any one of claims 1 or 2; and wherein v is at least 1; or
the polyoxometallate is represented by the formula:
Xₐ[Z_{b}WᵥM¹_{w}O_{d}]
wherein X, Z, a, b and d have the meanings and values as ascribed in any one of claims 1 or 2 and wherein is selected from one or more of Mo, V, Nb, Ta, Mn, Fe, Co, Cr, Ni, Zn Rh, Ru, Tl, Al, Ga, In, and other metals selected from the 1^{st}, 2^{nd} and 3^{rd} transition metal series and the lanthanide series of metals; wherein v+w = c, the value of which is as ascribed in any one of claims 1 or 2; and wherein v is at least 1.

4. A redox fuel cell according to any preceding claim wherein:
a. Z further comprises B, P, S, As, Ge, Co, Mn or Se;
b. Z further comprises P, S, or Co
c. M is absent of Mo;
d. M is absent of any metals other than V and W;
e. 1 to 6 vanadium centres are present in the polyoxometallate;
f. M consists of a combination of W, V and/or Mo;
or
g. M_{c} comprises:
i. at least two W atoms;
ii. at least four W atoms; or
iii. at least six W atoms.

5. A redox fuel cell according to any one of claims 1 or 2 wherein:
a. the polyoxometallate has the formula Xₐ[Z₁W₉V₃O₄₀];
b. the polyoxometallate has the formula Xₐ[Z₁W₁₁V₁O₄₀];
c. the polyoxometallate comprises H₆[AlW₁₁V₁O₄₀]; and/or
d. the polyoxometallate comprises K₂H₅[SiW₉V₃O₄₀].

6. A redox fuel cell according to one of claims 1 to 5 wherein X comprises:
a. a hydrogen and optionally alkali metal and/or alkaline earth metal ions;
b. an alkali metal ion and a hydrogen ion; and/or
c. one or more of H⁺, Na⁺, K⁺ or Li⁺.

7. A redox fuel cell according to any preceding claim wherein the catholyte solution comprises at least one ancillary redox species.

8. A redox fuel cell according to claim 7 wherein the ancillary redox species is selected from ligated transition metal complexes, triphenylamine type materials, additional polyoxometallate species, and combinations thereof.

9. A redox fuel cell according to claim 8, wherein the transition metal(s) in the transition metal complexes are selected from manganese in oxidation states II -V, iron I-IV, copper I-III, cobalt I-III, nickel I-III, chromium (II-VII), titanium II-IV, tungsten IV-VI, vanadium II - V and molybdenum II-VI; or wherein the triphenylamine type materials for use in combination with the polyoxometallates as defined in claims 1 to 6 comprises formula (I): 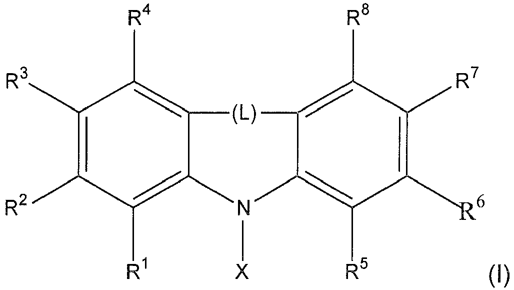 wherein:
X is selected from hydrogen and from functional groups comprising halogen, hydroxyl, amino, protonated amino, imino, nitro, cyano, acyl, acyloxy, sulphate, sulfonyl, sulfinyl, alkyamino, protonated alkylamino, quaternary alkylammonium, carboxy, carboxylic acid, ester, ether, amido, sulfonate, sulfonic acid, sulphonamide, phosphonic acid, phosphonate, phosphate, alkylsulfonyl, arylsulfonyl, alkoxycarbonyl, alkylsulfinyl, arylsulfinyl, alkylthio, arylthio, alkyl, alkoxy, oxyester, oxyamido, aryl, fused-aryl, arylamino, aryloxy, heterocycloalkyl, heteroaryl, fused-heteroaryl, (C₂-C₅)alkenyl, (C₂-C₅)alkynyl, azido, phenylsulfonyloxy, amino acid or a combination thereof;
R¹⁻⁸ are independently selected from hydrogen, halogen, hydroxyl, amino, protonated amino, imino, nitro, cyano, acyl, acyloxy, sulphate, sulfonyl, sulfinyl, alkyamino, protonated alkylamino, quaternary alkylammonium, carboxy, carboxylic acid, ester, ether, amido, sulfonate, sulfonic acid, sulphonamide, phosphonic acid, phosphonate, phosphate, alkylsulfonyl, arylsulfonyl, alkoxycarbonyl, alkylsulfinyl, arylsulfinyl, alkylthio, arylthio, alkyl, alkoxy, oxyester, oxyamido, aryl, fused-aryl, arylamino, aryloxy, heterocycloalkyl, heteroaryl, fused-heteroaryl, (C₂-C₅)alkenyl, (C₂-0C₅)alkynyl, azido, phenylsulfonyloxy, amino acid or a combination thereof;
R¹ and X and/or R⁵ and X may together form an optionally substituted ring structure;
R¹ and R² and/or R² and R³ and/or R³ and R⁴ and/or R⁴ and R⁸ and/or R⁸ and R⁷ and/or R⁷ and R⁶ and/or R⁶ and R⁵ may together form an optionally substituted ring structure; wherein
(L) indicates the optional presence of a linking bond or group between the two neighbouring aromatic rings of the structure, and when present may form an optionally substituted ring structure with one or both of R⁴ and R⁸; and wherein at least one substituent group of the structure is a charge-modifying substituent.

10. A redox fuel cell according to any one of claims 1 to 6 wherein the catholyte solution is substantially free from any ancillary redox species.

11. A redox fuel cell according to any preceding claim wherein the concentration of polyoxometallate in the catholyte solution is:
a. between 0.01M and 0.6M;
b. between 0.1M and 0.6M; and/or
c. between 0.15M and 0.4M.

12. A catholyte solution for use in a redox fuel cell according to any preceding claim, the solution comprising a polyoxometallate as defined in any one of claims 1 to 6.

13. The use of a redox fuel cell according to any one claims 1 to 11 to produce electricity.

14. A method of operating a fuel cell according to any one of claims 1 to 11 comprising the steps of:
a) forming H⁺ ions at an anode situated adjacent to an ion selective polymer electrolyte membrane;
b) supplying the catholyte of the invention with its redox couple in an oxidised state to a cathode situated oppositely adjacent to the ion selective polymer electrolyte membrane;
c) allowing the catalyst to become reduced upon contact with the cathode concomitantly with H⁺ ions passing through the membrane to balance charge;
d) optionally, passing the catholyte from the cathode to a reoxidation zone wherein the catalyst is reoxidised; and
e) optionally, passing the catholyte from the reoxidation zone to the catholyte reservoir.

## Patentansprüche

1. Redox-Brennstoffzelle, die Folgendes umfasst: eine Anode und eine Kathode, die durch eine ionenselektive Polymer-Elektrolyt-Membran getrennt sind; Mittel für die Zufuhr eines Brennstoffs zum Anodenbereich der Zelle; Mittel für die Zufuhr eines Oxidationsmittels zum Kathodenbereich der Zelle; Mittel für die Bereitstellung eines elektrischen Stromkreises zwischen der Anode und der Kathode; eine nichtflüchtige Katholytlösung, die in Flüssigkeitsverbindung mit der Kathode fließt, wobei die Katholytlösung ein Polyoxometallat-Redoxpaar umfasst, das zumindest teilweise an der Kathode beim Betreiben der Zelle reduziert wird und zumindest teilweise durch Reaktion mit dem Oxidationsmittel nach derartiger Reduktion an der Kathode regeneriert wird,
wobei das Polyoxometallat durch die folgende Formel dargestellt wird:
Xₐ[Z_{b}M_{c}O_{d}],
wobei:
X aus Folgenden ausgewählt ist: Wasserstoff, Alkalimetallen, Erdalkalimetallen, Ammonium und Kombinationen aus zwei oder mehr davon;
Z Al ist und optional eines oder mehrere von Folgenden einschließt: B, P, S, As, Si, Ge, Ni, Rh, Sn, Cu, I, Br, F, Fe, Co, Cr, Zn, H₂, Te, Mn und Se; oder
Z Si ist und optional eines oder mehrere von Folgenden einschließt: B, P, S, As, Ge, Ni, Rh, Sn, Al, Cu, I, Br, F, Fe, Co, Cr, Zn, H₂, Te, Mn und Se;
M W und eines oder mehrere von Folgenden umfasst: Mo, V, Nb, Ta, Mn, Fe, Co, Cr, Ni, Zn, Rh, Ru, Tl, Al, Ga, In und anderen Metallen, die aus der 1., 2. und 3. Übergangsmetallreihe und der Lanthanoidreihe ausgewählt sind;
a eine Anzahl von X ist, die zum Ladungsausgleich des [Z_{b}M_{c}O_{d}]^{a-}-Anions notwendig ist;
b im Bereich von 0 < b ≤ 5 liegt;
c von 5 bis 30 beträgt; und
d von 1 bis 180 beträgt.

2. Redox-Brennstoffzelle nach Anspruch 1, wobei
a. b im Bereich von 0 < b ≤ 2 liegt;
b. c von 10 bis 18 beträgt und optional c 12 beträgt; und/oder
c. d von 30 bis 70 beträgt, optional d von 34 bis 62 beträgt und weiter optional d von 34 bis 40 beträgt.

3. Redox-Brennstoffzelle nach einem der Ansprüche 1 oder 2, wobei:
das Polyoxometallat durch die folgende Formel dargestellt wird:
Xₐ[Z_{b}WᵥM¹_{w}M²ₓM³_{y}M⁴_{z}O_{d}],
wobei X, Z, a, b und d die Bedeutungen und Werte haben, die in einem der Ansprüche 1 oder 2 zugeschrieben wurden, und wobei M¹, M², M³ und M⁴ unabhängig aus einem oder mehreren von Folgenden ausgewählt sind: Mo, V, Nb, Ta, Mn, Fe, Co, Cr, Ni, Zn, Rh, Ru, Tl, Al, Ga, In und anderen Metallen, die aus der 1., 2. und 3. Übergangsmetallreihe und der Lanthanoidreihe von Metallen ausgewählt sind; wobei v + w + x + y + z = c, dessen Wert wie in einem der Ansprüche 1 oder 2 zugeschrieben ist; und wobei v mindestens 1 beträgt; oder
das Polyoxometallat durch die folgende Formel dargestellt wird:
Xₐ[Z_{b}WᵥM¹_{w}M²ₓM³_{y}O_{d}],
wobei X, Z, a, b und d die Bedeutungen und Werte haben, die in einem der Ansprüche 1 oder 2 zugeschrieben wurden, und wobei M¹, M² und M³ unabhängig aus einem oder mehreren von Folgenden ausgewählt sind: Mo, V, Nb, Ta, Mn, Fe, Co, Cr, Ni, Zn, Rh, Ru, Tl, Al, Ga, In und anderen Metallen, die aus der 1., 2. und 3. Übergangsmetallreihe und der Lanthanoidreihe von Metallen ausgewählt sind; wobei v + w + x + y = c, dessen Wert wie in einem der Ansprüche 1 oder 2 zugeschrieben ist; und wobei v mindestens 1 beträgt; oder
das Polyoxometallat durch die folgende Formel dargestellt wird:
Xₐ[Z_{b}WᵥM¹_{w}M²ₓO_{d}],
wobei X, Z, a, b und d die Bedeutungen und Werte haben, die in einem der Ansprüche 1 oder 2 zugeschrieben wurden, und wobei und M² unabhängig aus einem oder mehreren von Folgenden ausgewählt sind: Mo, V, Nb, Ta, Mn, Fe, Co, Cr, Ni, Zn, Rh, Ru, Tl, Al, Ga, In und anderen Metallen, die aus der 1., 2. und 3. Übergangsmetallreihe und der Lanthanoidreihe von Metallen ausgewählt sind; wobei v + w + x = c, dessen Wert wie in einem der Ansprüche 1 oder 2 zugeschrieben ist; und wobei v mindestens 1 beträgt; oder
das Polyoxometallat durch die folgende Formel dargestellt wird:
Xₐ[Z_{b}WᵥM¹_{w}O_{d}],
wobei X, Z, a, b und d die Bedeutungen und Werte haben, die in einem der Ansprüche 1 oder 2 zugeschrieben wurden, und wobei aus einem oder mehreren von Folgenden ausgewählt ist: Mo, V, Nb, Ta, Mn, Fe, Co, Cr, Ni, Zn, Rh, Ru, Tl, Al, Ga, In und anderen Metallen, die aus der 1., 2. und 3. Übergangsmetallreihe und der Lanthanoidreihe von Metallen ausgewählt sind; wobei v + w = c, dessen Wert wie in einem der Ansprüche 1 oder 2 zugeschrieben ist; und wobei v mindestens 1 beträgt.

4. Redox-Brennstoffzelle nach einem vorstehenden Anspruch, wobei:
a. Z weiter B, P, S, As, Ge, Co, Mn oder Se umfasst;
b. Z weiter P, S oder Co umfasst;
c. M kein Mo enthält;
d. M keines von Metallen enthält, die nicht V und W sind;
e. 1 bis 6 Vanadiumzentren in dem Polyoxometallat vorliegen;
f. M aus einer Kombination von W, V und/oder Mo besteht;
oder
g. M_{c} Folgendes umfasst:
i. mindestens zwei W-Atome;
ii. mindestens vier W-Atome; oder
iii mindestens sechs W-Atome.

5. Redox-Brennstoffzelle nach einem der Ansprüche 1 oder 2, wobei
a. das Polyoxometallat die Formel Xₐ[Z₁W₉V₃O₄₀] aufweist;
b. das Polyoxometallat die Formel Xₐ[Z₁W₁₁V₁O₄₀] aufweist;
c. das Polyoxometallat H₆[AlW₁₁V₁O₄₀] umfasst; und/oder
d. das Polyoxometallat K₂H₅[SiW₉V₃O₄₀] umfasst.

6. Redox-Brennstoffzelle nach einem der Ansprüche 1 bis 5, wobei X Folgendes umfasst:
a. ein Wasserstoff- und optional Alkalimetall- und/oder Erdalkalimetallionen;
b. ein Alkalimetallion und ein Wasserstoffion; und/oder
c ein oder mehrere von H⁺, Na⁺, K⁺ oder Li⁺.

7. Redox-Brennstoffzelle nach einem vorstehenden Anspruch, wobei die Katholytlösung mindestens eine zusätzliche Redoxspezies umfasst.

8. Redox-Brennstoffzelle nach Anspruch 7, wobei die zusätzliche Redoxspezies aus gebundenen Übergangsmetallkomplexen, Stoffen vom Triphenylamin-Typ, zusätzlichen Polyoxometallatspezies und Kombinationen davon ausgewählt ist

9. Redox-Brennstoffzelle nach Anspruch 8, wobei das/die Übergangsmetall(e) in den Übergangsmetallkomplexen aus Folgenden ausgewählt ist/sind: Mangan in den Oxidationszuständen II-V, Eisen I-IV, Kupfer I-III, Cobalt I-III, Nickel I-III, Chrom (II-VII), Titan II-IV, Wolfram IV-VI, Vanadium II-V und Molybdän II-VI; oder
wobei die Stoffe vom Triphenylamin-Typ für die Verwendung in der Kombination mit den Polyoxometallaten, wie in den Ansprüchen 1 bis 6 definiert, die folgende Formel (I) umfassen: 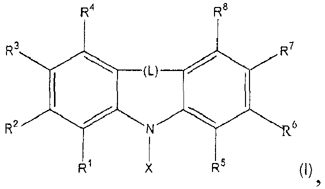 wobei
X aus Wasserstoff und aus funktionellen Gruppen ausgewählt ist, die Folgendes umfassen: Halogen, Hydroxyl, Amino, protoniertes Amino, Imino, Nitro, Cyano, Acyl, Acyloxy, Sulfat, Sulfonyl, Sulfinyl, Alkylamino, protoniertes Alkylamino, quartäres Alkylammonium, Carboxy, Carbonsäure, Ester, Ether, Amido, Sulfonat, Sulfonsäure, Sulfonamid, Phosphonsäure, Phosphonat, Phosphat, Alkylsulfonyl, Arylsulfonyl, Alkoxycarbonyl, Alkylsulfinyl, Arylsulfinyl, Alkylthio, Arylthio, Alkyl, Alkoxy, Oxyester, Oxyamido, Aryl, anelliertes Aryl, Arylamino, Aryloxy, Heterocycloalkyl, Heteroaryl, anelliertes Heteroaryl, (C₂-C₅)-Alkenyl, (C₂-C₅)-Alkinyl, Azido, Phenylsulfonyloxy, Aminosäure oder eine Kombination davon; R¹⁻⁸ unabhängig aus Folgenden ausgewählt sind: Wasserstoff, Halogen, Hydroxyl, Amino, protoniertem Amino, Imino, Nitro, Cyano, Acyl, Acyloxy, Sulfat, Sulfonyl, Sulfinyl, Alkylamino, protoniertem Alkylamino, quartärem Alkylammonium, Carboxy, Carbonsäure, Ester, Ether, Amido, Sulfonat, Sulfonsäure, Sulfonamid, Phosphonsäure, Phosphonat, Phosphat, Alkylsulfonyl, Arylsulfonyl, Alkoxycarbonyl, Alkylsulfinyl, Arylsulfinyl, Alkylthio, Arylthio, Alkyl, Alkoxy, Oxyester, Oxyamido, Aryl, anelliertem Aryl, Arylamino, Aryloxy, Heterocycloalkyl, Heteroaryl, anelliertem Heteroaryl, (C₂-C₅)-Alkenyl, (C₂-C₅)-Alkinyl, Azido, Phenylsulfonyloxy, Aminosäure oder einer Kombination davon; R¹ und X und/oder R⁵ und X zusammen eine optional substituierte Ringstruktur bilden können;
R¹ und R² und/oder R² und R³ und/oder R³ und R⁴ und/oder R⁴ und R⁸ und/oder R⁸ und R⁷ und/oder R⁷ und R⁶ und/oder R⁶ und R⁵ zusammen eine optional substituierte Ringstruktur bilden können; wobei
(L) die optionale Gegenwart einer verknüpfenden Bindung oder Gruppe zwischen den zwei benachbarten aromatischen Ringen der Struktur angibt und bei Vorliegen eine optional substituierte Ringstruktur mit einem oder beiden von R⁴ und R⁸ bilden kann; und wobei mindestens eine Substituentengruppe der Struktur ein ladungsmodifizierender Substituent ist.

10. Redox-Brennstoffzelle nach einem der Ansprüche 1 bis 6, wobei die Katholytlösung im Wesentlichen frei von jedweder zusätzlichen Redoxspezies ist.

11. Redox-Brennstoffzelle nach einem vorstehenden Anspruch, wobei die Konzentration von Polyoxometallat in der Katholytlösung folgende ist:
a. zwischen 0,01 M und 0,6 M;
b. zwischen 0,1 M und 0,6 M; und/oder
c. zwischen 0,15 M und 0,4 M.

12. Katholytlösung für die Verwendung in einer Redox-Brennstoffzelle nach einem vorstehenden Anspruch, wobei die Lösung ein Polyoxometallat, wie in einem der Ansprüche 1 bis 6 definiert, umfasst.

13. Verwendung einer Redox-Brennstoffzelle nach einem der Ansprüche 1 bis 11 zur Erzeugung von Strom.

14. Verfahren zum Betreiben einer Redox-Brennstoffzelle nach einem der Ansprüche 1 bis 11, das die folgenden Schritte umfasst:
a) Bilden von H⁺-Ionen an einer Anode, die sich benachbart zu einer ionenselektiven Polymer-Elektrolyt-Membran befindet;
b) Zuführen des Katholyten der Erfindung mit seinem Redoxpaar in einem oxidierten Zustand zu einer Kathode, die sich gegenüber benachbart zu der ionenselektiven Polymer-Elektrolyt-Membran befindet;
c) Ermöglichen, dass der Katalysator bei Kontakt mit der Kathode reduziert wird, wobei gleichzeitig H⁺-Ionen durch die Membran hindurchgehen, um die Ladung auszugleichen;
d) optional Passieren des Katholyten von der Kathode zu einer Reoxidationszone, wobei der Katalysator reoxidiert wird; und
e) optional Passieren des Katholyten von der Reoxidationszone zu dem Katholytenbehälter.

## Revendications

1. Pile à combustible redox comprenant une anode et une cathode séparées par une membrane électrolyte polymère sélective d'ions ; un moyen d'apport d'un combustible à la région d'anode de la pile ; un moyen d'apport d'un oxydant à la région de cathode de la pile ; un moyen d'apport d'un circuit électrique entre l'anode et la cathode ; une solution catholyte non volatile s'écoulant en communication fluide avec la cathode, la solution catholyte comprenant un couple redox de polyoxométallate étant au moins partiellement réduit au niveau de la cathode lors du fonctionnement de la pile, et au moins partiellement régénéré par réaction avec l'oxydant après une telle réduction au niveau de la cathode,
où le polyoxométallate est représenté par la formule :
Xₐ[Z_{b}M_{c}O_{d}]
dans laquelle
X est choisi parmi hydrogène, des métaux alcalins, des métaux alcalino-terreux, l'ammonium, et des combinaisons de deux, ou plus, parmi ceux-ci ;
Z est Al et comporte éventuellement un ou plusieurs parmi B, P, S, As, Si, Ge, Ni, Rh, Sn, Cu, I, Br, F, Fe, Co, Cr, Zn, H₂, Te, Mn et Se ; ou
Z est Si et comporte éventuellement un ou plusieurs parmi B, P, S, As, Ge, Ni, Rh, Sn, Al, Cu, I, Br, F, Fe, Co, Cr, Zn, H₂, Te, Mn et Se ;
M comprend W et un ou plusieurs parmi Mo, V, Nb, Ta, Mn, Fe, Co, Cr, Ni, Zn, Rh, Ru, Tl, Al, Ga, In, et d'autres métaux choisis parmi les 1ére, 2ème et 3ème séries de métaux de transition et les séries des lanthanides ;
a est un nombre de X nécessaire pour équilibrer la charge de l'anion [Z_{b}M_{c}O_{d}]^{a-} ;
b se trouve dans la plage 0 < b ≤ 5 ;
c va de 5 à 30 ; et
d va de 1 à 180.

2. Pile à combustible redox selon la revendication 1, dans laquelle
a. b se trouve dans la plage 0 < b ≤ 2 ;
b. c va de 10 à 18 et éventuellement c vaut 12 ; et/ou
c. d va de 30 à 70, éventuellement d va de 34 à 62 et en outre éventuellement, d va de 34 à 40.

3. Pile à combustible redox selon l'une quelconque des revendications 1 ou 2, dans laquelle
le polyoxométallate est représenté par la formule :
Xₐ[Z_{b}WᵥM¹_{w}M²ₓM³_{y}M⁴_{z}O_{d}]
dans laquelle X, Z, a, b et d revêtent les significations et les valeurs attribuées selon l'une quelconque des revendications 1 ou 2 et où M¹, M², M³ et M⁴ sont choisis indépendamment parmi un ou plusieurs parmi Mo, V, Nb, Ta, Mn, Fe, Co, Cr, Ni, Zn, Rh, Ru, Tl, Al, Ga, In, et d'autres métaux choisis parmi les 1ére, 2ème et 3ème séries de métaux de transition et les métaux de la série des lanthanides, où v+w+x+y+z = c, dont la valeur est telle qu'attribuée selon l'une quelconque des revendications 1 ou 2 ; et où v vaut au moins 1 ; ou
le polyoxométallate est représenté par la formule :
Xₐ[Z_{b}WᵥM¹_{w}M²ₓM³_{y}O_{d}]
dans laquelle X, Z, a, b et d revêtent les significations et les valeurs attribuées selon l'une quelconque des revendications 1 ou 2 et où M¹, M² et M³ sont choisis indépendamment parmi un ou plusieurs parmi Mo, V, Nb, Ta, Mn, Fe, Co, Cr, Ni, Zn, Rh, Ru, Tl, Al, Ga, In, et d'autres métaux choisis parmi les 1ére, 2ème et 3ème séries de métaux de transition et les métaux de la série des lanthanides, où v+w+x+y = c, dont la valeur est telle qu'attribuée selon l'une quelconque des revendications 1 ou 2 ; et où v vaut au moins 1 ; ou
le polyoxométallate est représenté par la formule :
Xₐ[Z_{b}WᵥM¹_{w}M²ₓO_{d}]
dans laquelle X, Z, a, b et d revêtent les significations et les valeurs attribuées selon l'une quelconque des revendications 1 ou 2 et où M¹ et M² sont choisis indépendamment parmi un ou plusieurs parmi Mo, V, Nb, Ta, Mn, Fe, Co, Cr, Ni, Zn, Rh, Ru, Tl, Al, Ga, In, et d'autres métaux choisis parmi les 1ére, 2ème et 3ème séries de métaux de transition et les métaux de la série des lanthanides, où v+w+x = c, dont la valeur est telle qu'attribuée selon l'une quelconque des revendications 1 ou 2 ; et où v vaut au moins 1 ; ou le polyoxométallate est représenté par la formule :
Xₐ[Z_{b}WᵥM¹_{w}O_{d}]
dans laquelle X, Z, a, b et d revêtent les significations et les valeurs attribuées selon l'une quelconque des revendications 1 ou 2 et où est choisi parmi un ou plusieurs parmi Mo, V, Nb, Ta, Mn, Fe, Co, Cr, Ni, Zn, Rh, Ru, Tl, Al, Ga, In, et d'autres métaux choisis parmi les 1ére, 2ème et 3ème séries de métaux de transition et les métaux de la série des lanthanides, où v+w = c, dont la valeur est telle qu'attribuée selon l'une quelconque des revendications 1 ou 2 ; et où v vaut au moins 1.

4. Pile à combustible redox selon l'une quelconque des revendications précédentes, dans laquelle
a. Z comprend en outre B, P, S, As, Ge, Co, Mn ou Se ;
b. Z comprend en outre P, S ou Co ;
c. M est absent de Mo ;
d. M est absent de tout métal autre que V et W ;
e. de 1 à 6 centres de vanadium sont présents dans le polyoxométallate ;
f. M est constitué d'une combinaison de W, V et/ou Mo ;
ou
g. M_{c} comprend :
i. au moins deux atomes de W ;
ii. au moins quatre atomes de W ; ou
iii. au moins six atomes de W.

5. Pile à combustible redox selon l'une quelconque des revendications 1 ou 2, dans laquelle
a. le polyoxométallate répond à la formule Xₐ[Z₁W₉V₃O₄₀] ;
b. le polyoxométallate répond à la formule Xₐ[Z₁W₁₁V₁O₄₀] ;
c. le polyoxométallate comprend H₆[AlW₁₁V₁O₄₀] ; et/ou
d. le polyoxométallate comprend K₂H₅[SiW₉V₃O₄₀].

6. Pile à combustible redox selon l'une des revendications 1 à 5, dans laquelle X comprend :
a. un hydrogène et éventuellement des ions de métaux alcalins et/ou de métaux alcalino-terreux ;
b. un ion de métal alcalin et un ion hydrogène ; et/ou
c. un ou plusieurs parmi H⁺, Na⁺, K⁺ ou Li⁺.

7. Pile à combustible redox selon l'une quelconque des revendications précédentes, dans laquelle la solution catholyte comprend au moins une espèce redox auxiliaire.

8. Pile à combustible redox selon la revendication 7, dans laquelle l'espèce redox auxiliaire est choisie parmi les complexes de métaux de transition ligaturés, des matériaux de type triphénylamine, d'autres espèces de polyoxométallate, et des combinaisons de ceux-ci.

9. Pile à combustible redox selon la revendication 8, dans laquelle le ou les métaux de transition dans les complexes de métaux de transition sont choisis parmi le manganèse dans les états d'oxydation II-V, le fer I-IV, le cuivre I-III, le cobalt I-III, le nickel I-III, le chrome (II-VII), le titane II-IV, le tungstène IV-VI, le vanadium II-V et le molybdène II-VI; ou
où les matériaux de type triphénylamine pour une utilisation en combinaison avec les polyoxométallates tels que définis selon les revendications 1 à 6, comprennent la formule (I) : 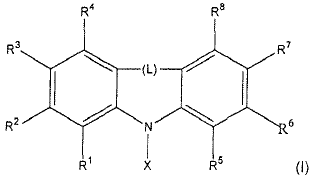 dans laquelle
X est choisi parmi hydrogène et parmi des groupements fonctionnels comprenant halogène, hydroxyle, amino, amino protoné, imino, nitro, cyano, acyle, acyloxy, sulfate, sulfonyle, sulfinyle, alkylamino, alkylamino protoné, alkylammonium quaternaire, carboxy, acide carboxylique, ester, éther, amido, sulfonate, acide sulfonique, sulfonamide, acide phosphonique, phosphonate, phosphate, alkylsulfonyle, arylsulfonyle, alcoxycarbonyle, alkylsulfinyle, arylsulfinyle, alkylthio, arylthio, alkyle, alcoxy, oxyester, oxyamido, aryle, aryle condensé, arylamino, aryloxy, hétérocycloalkyle, hétéroaryle, hétéroaryle condensé, (C₂-C₅)alcényle, (C₂-C₅)alcynyle, azido, phénylsulfonyloxy, acide aminé, ou une combinaison de ceux-ci ;
R¹⁻⁸ sont choisis indépendamment parmi hydrogène, halogène, hydroxyle, amino, amino protoné, imino, nitro, cyano, acyle, acyloxy, sulfate, sulfonyle, sulfinyle, alkylamino, alkylamino protoné, alkylammonium quaternaire, carboxy, acide carboxylique, ester, éther, amido, sulfonate, acide sulfonique, sulfonamide, acide phosphonique, phosphonate, phosphate, alkylsulfonyle, arylsulfonyle, alcoxycarbonyle, alkylsulfinyle, arylsulfinyle, alkylthio, arylthio, alkyle, alcoxy, oxyester, oxyamido, aryle, aryle condensé, arylamino, aryloxy, hétérocycloalkyle, hétéroaryle, hétéroaryle condensé, (C₂-C₅)alcényle, (C₂-C₅)alcynyle, azido, phénylsulfonyloxy, acide aminé, ou une combinaison de ceux-ci ;
R¹ et X et/ou R⁵ et X peuvent former ensemble une structure cyclique éventuellement substituée ;
R¹ et R² et/ou R² et R³ et/ou R³ et R⁴ et/ou R⁴ et R⁸ et/ou R⁸ et R⁷ et/ou R⁷ et R⁶ et/ou R⁶ et R⁵ peuvent former ensemble une structure cyclique éventuellement substituée ; où (L) indique la présence éventuelle d'un groupement ou d'une liaison de lien entre les deux cycles aromatiques voisins de la structure et, lorsqu'il est présent, peut former une structure cyclique éventuellement substituée avec un, ou les deux, parmi R⁴ et R⁸ ; et où au moins un groupement substituant de la structure est un substituant modifiant la charge.

10. Pile à combustible redox selon l'une quelconque des revendications 1 à 6, dans laquelle la solution catholyte est sensiblement exempte de toute espèce redox auxiliaire.

11. Pile à combustible redox selon l'une quelconque des revendications précédentes, dans laquelle la concentration en polyoxométallate dans la solution catholyte est :
a. comprise entre 0,01M et 0,6M ;
b. comprise entre 0,1M et 0,6M ; et/ou
c. comprise entre 0,15M et 0,4M.

12. Solution catholyte pour une utilisation dans une pile à combustible redox selon l'une quelconque des revendications précédentes, la solution comprenant un polyoxométallate tel que défini selon l'une quelconque des revendications 1 à 6.

13. Utilisation d'une pile à combustible redox selon l'une quelconque des revendications 1 à 11, afin de produire de l'électricité.

14. Méthode de fonctionnement d'une pile à combustible selon l'une quelconque des revendications 1 à 11, comprenant les étapes consistant à :
a) former de ions H⁺ au niveau d'une anode en position adjacente à une membrane électrolyte polymère sélective d'ions ;
b) fournir le catholyte de l'invention avec son couple redox à l'état oxydé à une cathode située en position adjacente opposée à la membrane électrolyte polymère sélective d'ions ;
c) permettre au catalyseur d'être réduit lors d'un contact avec la cathode, de manière concomitante au passage des ions H⁺ à travers la membrane afin d'équilibrer les charges ;
d) éventuellement, faire passer le catholyte de la cathode vers une zone de réoxydation où le catalyseur est réoxydé ; et
e) éventuellement, faire passer le catholyte de la zone de réoxydation vers le réservoir de catholyte.
